(19) Europäisches Patentamt
European Patent Office
Office européen des brevets

(11) Numéro de publication: **0 258 154 A1**

(12) **DEMANDE DE BREVET EUROPEEN**

(21) Numéro de dépôt: **87420198.1**

(22) Date de dépôt: **16.07.87**

(51) Int. Cl.[4]: **C 08 L 23/02**
C 08 K 3/00, C 08 K 5/09,
C 08 K 5/41, C 08 K 5/42,
C 08 K 5/53

(30) Priorité: **30.07.86 FR 8611239**

(43) Date de publication de la demande:
**02.03.88 Bulletin 88/09**

(84) Etats contractants désignés:
**AT BE CH DE ES GB IT LI NL SE**

(71) Demandeur: **PLUESS STAUFER AG**
**CH-4665 Oftringen (CH)**

(72) Inventeur: **Seinera, Henri**
**43, Rue Pasteur**
**F-69600 Oullins (FR)**

**Luberne, Patricia**
**159, Avenue Gabriel Péri**
**F-92230 Gennevilliers (FR)**

**Stock, Claude**
**4, Allée Paul Langevin**
**F-77420 Champs-Sur-Marne (FR)**

**Trouve, Patrick**
**36, Rue de la Noise**
**F-92140 Clamart (FR)**

(74) Mandataire: **Gaucherand, Michel**
**OMYA S.A. Département Propriété Industrielle 35, Cours Aristide Briand**
**F-69300 Caluire (FR)**

(54) **Compositions thermoplastiques à très haute teneur en matières minérales pulvérulentes pour incorporation dans les polymères.**

(57) Agrégats thermoplastiques cohérents à très haute teneur en matières minérales pulvérulentes se composant desdites matières, de polymères et/ou copolymères polyoléfiniques et éventuellement de divers adjuvants connus, qui se caractérisent en ce que, dans le but qu'ils aient simultanément une masse volumique proche et au plus égale à la masse volumique théorique des matières minérales pulvérulentes entrant dans leur composition et une excellente compatibilité pour les polymères de redispersion, les polymères et/ou copolymères entrant dans la composition desdits agrégats en présence d'un agent fluidifiant sont choisis dans le groupe des thermoplastiques de point de fusion et/ou de ramollissement au moins égal à 60°C et d'indice de fluidité d'au moins 50 (mesuré selon la norme ASTM D 1238) de type polyoléfinique autres que les polyoléfines comportant un monomère polaire.

EP 0 258 154 A1

**Description**

COMPOSITIONS THERMOPLASTIQUES A TRES HAUTE TENEUR EN MATIERES MINERALES PULVERULENTES POUR INCORPORATION DANS LES POLYMERES

L'invention concerne des compositions thermoplastiques ou agrégats thermo-plastiques comprenant pour l'essentiel des matières minérales pulvérulentes en très haute teneur, au moins un polymère et/ou copolymère thermoplastique polyoléfinique autre que les polyoléfines comportant un monomère polaire, en petite quantité, disposant d'un indice de fluidité élevé, enfin un agent fluidifiant du mélange constitué par les matières minérales pulvérulentes et le polymère et/ou copolymère thermoplastique, lesdites compositions ou agrégats étant destinés à être incorporés dans les polymères thermoplastiques.

D'une manière générale et selon l'art antérieur, il est connu depuis longtemps de préparer des granulés thermoplastiques ou "mélanges-maîtres" formés d'une matière minérale et/ou organique pulvérulente telle que, par exemple, du carbonate de calcium très finement broyé, du kaolin, du talc, de l'alumine hydratée, de l'oxyde de titane, du sulfate de baryum, de l'oxyde de zinc..., éventuellement d'agents divers tels que des stabilisants, des lubrifiants, des plastifiants, des agents de pontage, des agents biocides, des ignifugeants, et d'un polymère thermoplastique qui est généralement une polyoléfine d'indice de fluidité inférieur à 50, le mélange de ces divers constituants étant soumis à des actions thermiques et mécaniques de malaxage et d'extrusion.

Jusqu'à ce jour, l'homme de métier a tenté de jouer sur la composition des granulés, en augmentant le plus possible et pour des raisons économiques la part de matière minérale et/ou organique grâce à l'emploi des malaxeurs les plus puissants. Aujourd'hui, malgré de nombreuses recherches faites en ce domaine, il est reconnu que la part de matière minérale introduite ne peut guère dépasser 75% en poids des granulés, représentant 300 parties en poids pour 100 parties en poids de polymère, sans présenter des inconvénients majeurs pour la préparation et/ou l'emploi des granulés produits (mélanges-maîtres") dont la conséquence est une redispersion non homogène de la matière minérale dans les polymères de redispersion.

L'un des inconvénients majeurs qui apparaît lors de la mise en oeuvre de matière minérale, en quantité élevée, proche des limites précitées, se manifeste dans l'hétérogénéité (au moment et quelle que soit l'importance du malaxage) du mélange formé de la charge minérale et du polymère tel qu'une polyoléfine, qui peut conduire à la réalisation de granulés de composition très hétérogène préjudiciable à leur utilisation ultérieure, hétérogénéité souvent à l'origine de la chute des caractéristiques mécaniques des matières plastiques chargées au moyen desdits granulés.

Un autre inconvénient également majeur apparaît quand l'homme de métier tente d'augmenter d'une manière excessive la quantité de matière minérale par rapport à la quantité de polymère thermoplastique mis en oeuvre dans le mélange, c'est-à-dire tente d'introduire plus de 300 parties en poids de charge minérale pour 100 parties en poids de polymère car, dans ce cas, il se produit au moment du malaxage des composants et selon le type de malaxeur utilisé, soit une prise en masse du mélange conduisant au blocage du malaxeur quand celui-ci est par exemple du type à vis, soit une ségrégation des constituants qui se manifeste par l'impossibilité de les lier quand le malaxeur est du type à hélices ou à rotors.

Dès lors, il devient impensable de mettre en oeuvre, c'est-à-dire de redisperser de telles compositions hétérogènes dans des polymères thermoplastiques de redispersion, sans risque de produire des matières plastiques chargées de manière très irrégulière dont les aspects de surface et certains caractéristiques mécaniques seraient très sensiblement affaiblies, voire compromises.

Ainsi, il s'avère que la composition de granulés en matières minérales par rapport à la quantité de polymères thermoplastiques est naturellement limitée en raison des inconvénients majeurs précités.

Pourtant, de telles difficultés ont antérieurement conduit l'homme de métier à rechercher toutes améliorations qui pouvaient être apportées aux divers constituants de ces compositions plastiques pour qu'elles puissent contenir de plus en plus de matières minérales sans que se produisent les inconvénients précités.

C'est pourquoi de multiples solutions ont été préconisées dans la littérature spécialisée pour pallier ces inconvénients majeurs.

Tout d'abord, et parce que les matières minérales ont souvent un caractère hydrophile, elles apparaissent comme peu conciliables avec tous les polymères et en particulier avec ceux franchement hydrophobes. Dans le cas des polymères franchement hydrophobes, il est reconnu que la présence des matières minérales hydrophiles, selon les quantités citées dans l'art antérieur, peut provoquer la détérioration des caractéristiques mécaniques des polymères chargés. Pour combattre ce phénomène, la littérature spécialisée a recommandé d'estomper le caractère hydrophile des matières minérales telles que les carbonates de calcium naturels finement broyés, en les traitant au moyen de substances organiques formant une enveloppe conciliable avec les polymères. C'est ainsi que les carbonates de calcium naturels ont été traités avec des agents choisis parmi les acides carboxyliques insaturés ou non de poids moléculaire moyen ou élevé, tels que les acides butyrique, laurique, oléïque, stéarique, ainsi que parmi les alcools de poids moléculaires élevés, transformés par combinaison en sulfonates, sulfates ou autres (FR 1 047 087). Mais on a pu constater que l'usage du carbonate de calcium modifié par un tel traitement ne permettait pas d'augmenter la quantité de matières minérales dans les polymères de manière sensible.

Par la suite, on a proposé de créer une bonne compatiblité entre la matière minérale hydrophile et le

polymère hydrophobe en introduisant, lors de la préparation de la composition, un agent de pontage qui crée une liaison entre la charge minérale et le polymère, agent de pontage constitué par un composé organo-phosphorique du type phosphonate ou acide phosphonique, de telle sorte que la composition thermoplastique destinée au moulage contienne de 90 à 20 parties en poids d'une polyoléfine de faible indice de fluidité, de 10 à 80 parties en poids d'une carbonate alcalino-terreux et de 0,1 à 10 parties en poids par rapport à la charge minérale de l'agent de pontage (DE 2735160). Toutefois, il a été constaté que l'utilisation d'un tel agent n'apportait pas les améliorations escomptées. En d'autres termes, la compatibilité entre la charge minérale hydrophile et les polyoléfines hydrophobes n'est pas sensiblement améliorée, de telle sorte que certaines propriétés mécaniques des polymères chargés restent encore insuffisantes.

On a également proposé, pour améliorer la compatibilité entre la matière minérale hydrophile et le polymère hydrophobe, de substituer à l'agent de pontage précité un composé organo-soufré, de type esters sulfuriques ou acide sulfonique, ou de leurs dérivés (EP 0 017 038). Mais, s'il a été constaté que l'utilisation de ce dernier agent améliore certaines propriétés mécaniques des polymères chargés, par l'effet de pontage, pour les quantités préconisées de matières minérales, par contre la quantité de matières minérales reste limitée au plus à 80% en poids de la masse totale, ou encore reste limitée à 400 parties en poids de matière minérale pour 100 parties du cumul formé par le polymère et l'agent de pontage.

Dans ce même esprit et pour améliorer les opérations de moulage par injection ou par extrusion de compositions polymères chargées de plus de 30% en poids (par rapport à la masse totale) de matières minérales, on a aussi proposé (EP -A- 0 114 724) des compositions thermoplastiques chargées comprenant un polymère oléfinique d'indice de fluidité (MFI) compris entre 0,1 et 40, une charge minérale (de 30 à 90% en poids par rapport à la charge totale) et un agent dit "processing aid" formé d'un mélange : a) d'un sel métallique d'un acide carboxylique comprenant au moins 6 atomes de carbone et b) d'esters dudit acide (a) ou de phosphate organique ou encore d'un lubrifiant.

Mais il s'est avéré expérimentalement que les compositions polymères précitées (dont le polymère a un indice de fluidité compris entre 0,1 et 40) ne pouvaient pas contenir plus de 80% en poids de charge minérale sans manifester une très mauvaise redispersion dans les polymères thermoplastiques et corrélativement une chute des propriétés mécaniques malgré la présence de l'agent, dit "processing aid".

On a aussi proposé (US 4,455,344) de préparer des granulés contenant :

a) de 60 à 90 parties en poids d'une charge minérale de dimension moyenne comprise entre 0,05 et 100 µm,

b) de 5 à 35 parties en poids d'une polyoléfine cristalline de dimension moyenne comprise entre 150 et 1 000 µm,

c) de 5 à 35 parties en poids d'un agent liant ayant un point de fusion inférieur d'au moins 10° C à celui de la polyoléfine cristalline.

Pour aboutir à de tels granulés, le procédé proposé consiste à recouvrir la polyoléfine cristalline et/ou les particules de la charge minérale au moyen de l'agent liant qui constitue une enveloppe assurant l'adhérence des particules entre elles.

Mais il a été expérimentalement vérifié que les granulés préparés par le procédé précité ne pouvaient pas supporter une concentration en matière minérale supérieure à 80% en poids, sans présenter une médiocre redispersion dans les polymères, même en utilisant une matière minérale de granulométrie moyenne élevée, telle que 50 µm par exemple. Cette limite de 80% en poids devient absolument inaccessible et irréaliste à cause de l'apparition au cours du malaxage d'une ségrégation de phases qui se manifeste quand la granulométrie de la charge minérale est choisie dans les valeurs moyennes inférieures à 50 µm, c'est-à-dire quand l'utilisateur fait usage de granulométrie moyenne de l'ordre par exemple de 3 µm.

Comme la Demanderesse a pu le constater, un tel procédé ne conduit pas à la production d'un mélange pâteux cohérent, c'est-à-dire de même composition dans la totalité du mélange à la température de réalisation et avec les moyens utilisés, mais à l'obtention d'agglomérats incohérents, c'est-à-dire de composition généralement différents de l'un à l'autre, de dimensions irrégulières entraînant ultérieurement une mauvaise redispersion dans les polymères appropriés.

Enfin, dans le but d'améliorer spécifiquement des caractéristiques mécaniques de compositions à partir de polymères thermoplastiques, on a proposé (EP -A- 0 100 066) des compositions à base de copolymères polaires du type éthylène-vinylacétate d'indice de fluidité compris entre 0,1 et 400 et préférentiellement de 0,1 à 50 (Norme ASTM D 1238, 190° C - 2,16 kg, filière 2,09 mm) et/ou de polymères polyoléfiniques.

Lesdites compositions contiennent aussi de 40 à 90% en poids de charges minérales (dont il faut tenir compte de la densité) par rapport à la masse totale, et de 0,05 à 5% en poids d'agents de surface (surfactants) connus de l'homme de l'art, et éventuellement des agents tels que plastifiants, des caoutchoucs thermoplastiques, des agents collants.

Mais si ces compositions chargées à base de comonomères polaires sont très appréciées pour créer par transformation directe des tapis d'isolation phonique pour automobiles ayant des propriétés mécaniques spécifiques, il n'en est plus de même quand le but recherché n'est plus l'amélioration des caractéristiques mécaniques mais la réalisation de granulés très fortement chargés ("mélanges-maîtres") destinés à être redispersés d'une manière homogène dans tous les polymères thermoplastiques.

Car, malgré la présence de l'agent de surface et l'usage d'un pourcentage important de polymère polaire d'indice de fluidité élevé (MFI de 400 par exemple pour ledit polymère), la présence du comonomère polaire ne permet pas de réaliser des granulés homogènes comportant plus de 80% en poids de charge minérale qui

puissent ultérieurement être redispersés uniformément dans les polymères de redispersion.

Les mêmes inconvénients sont constatés quand les compositions polymères ne contiennent que des polymères oléfiniques dont les indices de fluidité sont inférieurs à 10 comme cela est perceptible dans les exemples d'application.

Forte des inconvénients précités, la Demanderesse, poursuivant ses recherches, a trouvé et mis au point par la combinaison nouvelle de moyens connus ou non des compositions plastiques ou agrégats à très haute teneur en matière minérale pulvérulente, lesdites matières pulvérulentes ayant une granulométrie moyenne telle que 95% d'entre elles aient au moins une dimension inférieure à 30 µm.

La présente invention concerne des agrégats thermoplastiques cohérents à très haute teneur en matières minérales pulvérulentes qui se composent desdites matières, de polymères et/ou copolymères et éventuellement de divers adjuvants connus, et qui se caractérisent en ce que, dans le but qu'ils aient une masse volumique proche et au plus égale à la masse volumique théorique des matières minérales pulvérulentes entrant dans leur composition et qu'ils aient simultanément une excellente compatibilité pour les polymères de redispersion, les polymères et/ou copolymères entrant dans la composition desdits agrégats sont choisis dans le groupe des thermoplastiques de point de fusion et/ou de ramollissement au moins égal à 60° C et d'indice de fluidité d'au moins 50 (mesuré selon la norme ASTM D 1238) de type polyoléfinique autres que les polyoléfines comportant un monomère polaire.

Selon la norme ASTM D 1238, l'indice de fluidité caractérisant le polymère et/ou copolymère selon l'invention est la quantité de polymère et/ou copolymère, exprimée en grammes pour 10 minutes, qui s'écoule à une température choisie dans l'intervalle limité par les températures de ramollissement et de transformation (polyéthylènes : 190° C, polypropylènes : 230° C) sous une charge donnée normalisée (2,16 kg pour les polyéthylènes et polypropylènes) au travers d'une filière de diamètre déterminé (2,09 millimètres à 2,10 millimètres) pendant un temps mesuré.

Si les granulés selon l'art antérieur sont bien réalisés à partir de mélanges contenant des matières minérales pulvérulentes, au moins un polymère et/ou copolymère polyoléfinique et éventuellement divers adjuvants connus, il apparaît que les polymère et/ou copolymère mis en oeuvre dans leurs compositions sont toujours choisis parmi ceux contenant au moins un comonomère polaire et/ou ceux ayant un indice de fluidité inférieur à 50 dans les conditions de la norme ASTM précitée. De ce fait, et comme cela a été vérifié, l'usage de tels polymères ne permet pas la production de granulés ayant une teneur en matières minérales pulvérulentes supérieures à 80% en poids car, à de telles concentrations, leur redispersion se révèle impossible parce que non homogène au sein des polymères de redispersion classiques, tels que par exemple les polyoléfines.

Les agrégats selon l'invention comportant dans leurs compositions une très haute teneur en matière minérale pulvérulente, au moins un polymère et/ou copolymère et éventuellement divers adjuvants connus se caractérisent également par le fait que les polymères et/ou copolymères entrant dans la composition des agrégats et choisis dans le groups précité sont mis en oeuvre dans les agrégats en quantité mineure et en présence d'un agent fluidifiant.

En pratique, les agrégats thermoplastiques selon l'invention se composent :

a) de 19,99 à 4,05 parties en poids par rapport à la masse totale d'au moins un polymère et/ou copolymère thermoplastique polyoléfinique autre que les polyoléfines comportant un monomère polaire de point de fusion et/ou de ramollissement au moins égal à 60° C et d'indice de fluidité d'au moins 50 (norme ASTM D 1238),

b) de 80 à 95 parties et préférentiellement de 85,7 à 92,3 parties en poids par rapport à la masse totale de matières minérales pulvérulentes, représentant de 400 à 1 900 et préférentiellement de 600 à 1 200 parties en poids pour 100 parties en poids dudit polymère et/ou copolymère thermoplastique,

c) enfin, de 0,01 à 0,95 partie en poids d'un agent fluidifiant du mélange par rapport à la masse totale.

Les polymères et/ou copolymères polyoléfiniques exempts de monomères polaires entrant dans la composition des agrégats selon l'invention sont choisis parmi ceux disposant d'un point de fusion et/ou de ramollissement d'au moins 60°C et d'un indice de fluidité d'au moins 50 selon la norme ASTM précitée, tels que les polyéthylènes de basse densité, linéaires ou ramifiés ou de haute densité, les polypropylènes homopolymères, ou copolymères, les polybutylènes et les copolymères obtenus par les combinaisons lors de la copolymérisation de deux au moins des monomères éthylène, propylène et butylènes, les polyoléfines modifiées par greffage ou copolymérisation telles que par exemple les polyoléfines halogénées, les polypropylènes modifiées EPDM, les polypropylènes modifiés SEBS ou encore de deux au moins des polymères et/ou copolymères précités par mélange physique.

Cependant, les polymères et/ou copolymères polyoléfiniques intervenant dans la composition des agrégats selon l'invention sont préférentiellement choisis parmi ceux qui disposent d'un indice de fluidité d'au moins 200 et très préférentiellement choisis parmi ceux qui disposent d'un indice de fluidité d'au moins 400 dans les conditions de la norme ASTM D 1238.

Les matières minérales pulvérulentes entrant dans la composition des agrégats selon l'invention peuvent être d'origines naturelle ou synthétique et introduites seules ou en mélanges. Elles sont généralement choisies dans les sels et/ou oxydes minéraux contenant au moins un élément métallique, tels que par exemple les carbonates alcalino-terreux, comme le carbonate de calcium, le carbonate de magnésium, le carbonate de zinc, la dolomie; la chaux; la magnésie; les sulfates de baryum, de calcium; les hydroxydes d'aluminium; la silice, les argiles et autres silico-alumineux tels que le kaolin, le talc, le mica; les oxydes métalliques tels que par exemple l'oxyde de zinc, les oxydes de fer, l'oxyde de titane, les fibres et billes de verre, la wollastonite.

A ces matières minérales pulvérulentes peuvent être adjointes des matières pulvérulentes organiques d'origines naturelle ou synthétique tels que par exemple colorants, amidon, fibres et farine de cellulose, les fibres de carbone.

Toutes ces matières pulvérulentes minérales peuvent être mises en oeuvre seules ou en combinaisons, selon le type des agrégats souhaités.

De préférence, les matières pulvérulentes utilisées dans l'invention ont au moins une dimension comprise entre 0,01 et 100 µm et plus particulièrement entre 0,1 et 5 µm, la quantité de matières minérales pulvérulentes introduites dans le mélange dépendant non seulement de la nature de ladite matière, de sa granulométrie mais aussi de sa densité.

L'agent fluidifiant utilisé dans le cadre de l'invention répond à la formule générale comprenant au moins une fonction acide libre :

$$R - (A)_m - (B)_n - X$$

dans laquelle (A) représente l'oxyde d'éthylène, (B) représente l'oxyde de propylène, avec $0 \leqq (m + n) \leqq 24$, R est un radical alkyl linéaire ou non, saturé ou insaturé, un radical aryl, un radical alkyl-aryl, un hétérocycle saturé ou non contenant de 5 à 28 atomes de carbone et de préférence de 8 à 24 atomes de carbone, ou encore un radical stéroïde, ledit radical R pouvant être ramifié ou non et/ou comporter un ou plusieurs groupements fonctionnels du type halogène -OH, -COOH, -COOR, $-NO_2$, $-NH_2$, $-CONH_2$, -CN, sulfonique, sulfurique, phosphinique, phosphonique, alors que X peut être l'un des radicaux carboxylique, sulfonique, sulfurique, phosphinique, phosphonique.

Dans le cas où X comporte plusieurs fonctions acides, l'une d'entre elles au moins doit rester libre, les autres pouvant être salifiées ou estérifiées au moyen d'un alcool de formule R'-OH dans laquelle le radical R' peut être une chaîne carbonée contenant 1 à 4 atomes de carbone ou l'un des radicaux appartenant au groupe précédemment défini pour R. Il est également possible que le radical R' soit identique au radical R.

A titre d'exemple, on peut citer pour le radical R les radicaux aussi divers que n-hexyl, n-octyl, n-decyl, n-dodecyl, n-dodecyldioxyéthylène, n-tetradécyl, n-hexadécyl, n-hexadécyltrioxyéthylène, n-octadécyl, n-octadécyloxyéthylène, n-octylpentaoxyéthylène, n-heptadécyl, phényl, méthyl-2 butyl-2, méthyl-2 butyl-1, phényl-3 propényl-1, phényl-1 propényl, paranonylphényl dioxyéthylène, paraméthylphényl, cyclohexyl, le radical du cholestérol, le βnaphtyl, les radicaux des diols.

Les divers adjuvants de type connu, qui peuvent être également introduits dans la composition des agrégats selon l'invention, appartiennent au groupe constitué par les stabilisants thermiques ou photochimiques, les lubrifiants, les plastifiants, les antistatiques, les ignifugeants, les agents passivants des métaux, comme par exemple les agents cupropassifs.

En pratique, la préparation des agrégats selon l'invention se fait par l'usage de procédés et moyens connus de l'homme de l'art comportant les étapes de malaxage et de granulation.

L'étape de malaxage qui s'effectue dans un mélangeur muni de moyens d'agitation et de moyens de chauffage consiste à traiter à la température de transformation des polyoléfines (d'indice de fluidité d'au moins 50) autres que celles comportant un monomère polaire et sous agitation suffisante le mélange des composants introduits successivement ou simultanément dans le malaxeur. La température de transformation desdites polyoléfines est généralement comprise entre 60° C et 300° C.

Le malaxage peut se faire en utilisant un malaxeur de type connu, tel que par exemple les mélangeurs internes continus ou discontinus, les extrudeuses à double vis, les mélangeurs rapides.

L'étape de granulation qui suit l'étape de malaxage permet de transformer en agrégats le mélange chaud provenant du malaxage, selon les moyens bien connus, tels que par exemple par l'extrusion à travers une filière suivie d'une coupe, ou encore par calandrage d'une feuille et sa découpe ou bien en utilisant des rouleaux granulateurs.

Les agrégats obtenus selon l'invention ont une taille qui est favorablement proche de celle des granulés de polymères dans lesquels ils sont destinés à être redispersés.

Les agrégats selon l'invention offrent une excellente compatibilité de redispersion dans les polymères ou copolymères thermoplastiques plus particulièrement dans ceux choisis dans le groupe constitué par les polyoléfines homo ou copolymères, tels que par exemple les polyéthylènes basse ou haute densité, les polyéthylènes linéaires, les polypropylènes, les copolymères éthylène-propylène, éthylène-acétate de vinyle, éthylène-acide acrylique, les polyéthylènes halogénés tels que le polyéthylène chloré, le polybutène, le polyméthylpentène, le polyisobutylène; les polystyrènes et leurs dérivés tels que par exemple les styrène-butadiènes, les Acrylonitrile-Butadiène-Styrènes, les styrène-acrylonitriles, les styrène-butadiène-styrènes; les polychlorures de vinyle; les polycarbonates; les polyesters saturés tels que les polytéréphthalates d'éthylène et/ou de butylène; les polyphénylènes oxydes; les polyamides.

La redispersion des agrégats selon l'invention s'effectue au sein d'au polymère et\ou copolymère choisi par l'utilisateur dans le groupe précité des polymères et/ou copolymères, à partir de prémélanges, et selon les méthodes de transformation bien connues jusqu'à ce jour.

Parmi les modes de transformation choisis, peuvent être cités à titre d'exemples illustratifs de l'invention d'abord, l'extrusion d'un film ou d'une gaine, l'extrusion de bandelettes, ou encore l'extrusion couchage sur papier ou feuilles métalliques dont les prémélanges peuvent contenir par exemple de 1 à 30% en poids

d'agrégats par rapport à la formulation totale. Mais peuvent être également cités parmi les modes de transformation, l'injection, le soufflage de corps creux, l'extrusion de tubes, profilés ou feuilles, la fabrication de fils et cables, le calandrage, à partir de prémélanges pouvant contenir de 1 à 70% en poids d'agrégats par rapport à la formulation totale.

L'invention sera mieux comprise grâce à la description illustrative des exemples de préparation et de redispersion des agrégats selon l'invention.

Exemple 1

Cet exemple illustre la préparation des agrégats selon l'invention, en faisant usage de quatre modes différents bien connus de l'homme de l'art pour ce type de production.

Premier mode de préparation

Dans un mélangeur rapide, type GUEDU, ayant une cuve chauffée électriquement d'une capacité de 4,5 litres, on a préparé à la température de 140° C un mélange ayant la composition suivante exprimée en parties en poids:

- $CaCO_3$ naturel Millicarb, produit par la société OMYA, ayant une surface spécifique de 2 $m^2$ g-l, un diamètre moyen de 3 µm et une coupe de 10 µm, représentant 790 parties en poids pour 100 parties de polymère 880
- Polymère polyoléfinique Vestoplast 3632 (société HULS) d'indice de fluidité 800 mesuré à 140° C sous une charge de 2,16 kg 111,4
- Agent fluidifiant : alkylphosphonate de formule $C_{14}$ $H_{29}$-$PO_3H_2$ représentant 0,91 partie pour 100 parties de matières minérales 8
- Stabilisant thermique IRGANOX 1010 (CIBA-GEIGY) 0,6

On a d'abord introduit dans l'enceinte chauffée à 140° C le tiers environ de la matière minérale pulvérulente constituée par le $CaCO_3$ naturel avec le polymère polyoléfinique selon l'invention, le stabilisant et l'agent fluidifiant.

Le mélange a été soumis à l'action mécanique d'une pale tournant à la vitesse de 1 500 tours par minute tandis que la température du milieu était maintenue à 140° C.

Puis on a rajouté au dit mélange les deux tiers restants de $CaCO_3$ et l'on a maintenu l'agitation jusqu'à l'obtention d'une pâte homogène.

L'ensemble des opérations a duré environ 15 minutes.

La pâte obtenue a été ensuite calandrée sous forme de plaques qui ont fait l'objet d'une découpe en petits cubes ayant une dimension de 2 à 3 millimètres de côté, constituant les agrégats selon l'invention.

Deuxième mode de préparation

Dans un comalaxeur de laboratoire de type BUSS, PR 46, disposant d'une zone de malaxage chauffée électriquement, on a introduit un mélange ayant la composition suivante exprimée en parties en poids :

- $CaCO_3$ naturel Millicarb produit par la société OMYA, ayant une surface spécifique de 2 $m^2$ g-l, un diamètre moyen de 3 µm, une coupe de 10 µm, représentant 985 parties en poids pour 100 parties de polymère 900
- Polymère polyoléfinique
- Vestoplast 3632 (société HULS) d'indice de fluidité 800 (140° C - 2,16 kg) 80
- Vestowax $H_2$ (société HULS) (cire de polyéthylène) 11,4
- Agent fluidifiant Alkylphosphonate oxyéthylé de formule $C_{12}$ $H_{25}$-(O-$CH_2$-$CH_2$)$_2$-$PO_3$ $H_2$ représentant 0,88 partie pour 100 parties de matières minérales 8
- Agent de stabilisation thermique IRGANOX 1010 (CIBA-GEIGY) 0,6

Cette composition a été prémélangée à la température ambiante dans un mélangeur rapide du type Papenmeyer puis transférée dans la trémie du comalaxeur BUSS. La zone de malaxage de ce dernier était à une température de 140° C, la vitesse de rotation de la vis de 60 tours par minute et le debit à la sortie de l'extrudeuse de 15 kg par heure, ladite extrudeuse étant munie d'une filière permettant une coupe en tête à anneaux d'eau.

Troisième mode de préparation

On a préparé dans un mélangeur GUITTARD Réf. ML2, disposant d'une zone de malaxage chauffée à 140° C, un mélange ayant la composition suivante exprimée en parties en poids :

- $CaCO_3$ naturel Millicarb de la société OMYA, surface spécifique 2 $m^2$ g-l, diamètre moyen 3 µm, coupe à 10 µm, représentant 698,8 parties pour 100 parties de polymère 870
- Polymère polyoléfinique Vestoplast 3632 (société HULS) d'indice de fluidité 800 (140° C - 2,16 kg) 124,5
- Agent fluidifiant Alkylsulfate oxyéthylé $C_{12}$ $H_{25}$-O-($CH_2$-$CH_2$-O)$_2$ $SO_3H$ (exemple Tableau III page 12 du brevet HOECHST 0 017 038) 5
- Agent de stabilisation thermique IRGANOX 1010 (CIBA GEIGY) 0,5

La vitesse de rotation des bras du malaxeur était de 47 tours par minute et le temps de malaxage était de 30 minutes.

La pâte ainsi obtenue a été calandrée et a donné une plaque d'épaisseur 3 millimètres qui a été ultérieurement découpée en petits cubes, constituant les agrégats selon l'invention.

Quatrième mode de préparation

Dans un mélangeur interne de type BAMBURRY-FARREL F 80 ayant une chambre de malaxage préchauffée par un fluide caloporteur à la température de 60° C, on a introduit un mélange ayant la composition suivante exprimée en parties en poids :

- $CaCO_3$ naturel Millicarb de la société OMYA ayant une surface spécifique de 2 $m^2$ g-l, un diamètre moyen de 3 µm et une coupe de 10 µm, représentant 790 parties en poids pour 100 parties de polymère 880
- Polymère polyoléfinique Vestoplast 3632 (société HULS) d'indice de fluidité 800 (140° C - 2,16 kg) 111,5
- Agent fluidifiant Alkylsulfonate de formule $C_{14}$ $H_{29}$-$SO_3H$ représentant 0,91 partie en poids pour 100 parties de matière minérale 8
- Agent de stabilisation thermique IRGANOX 1010 (CIBA GEIGY) 0,5

La température finale dudit mélange était de 140° C et la vitesse de rotation des pales de 90 tours/minute.

Puis la pâte ainsi obtenue a été soumise à l'action de rouleaux granulateurs donnant ainsi les agrégats selon l'invention.

Exemple 2

Cet exemple illustre la très bonne redispersion au sein de polymères polyoléfiniques des agrégats selon l'invention préparés selon les modes 1 et 4 de l'exemple 1.

Pour ce faire, on a réalisé par injection des éprouvettes normalisées (type ISO) au moyen d'une presse NESTAL NEOMAT 170/90 pilotée par un microprocesseur. La force de fermeture était de 900 KN, le diamètre de la vis de 32 mm, et le rapport longueur/diamètre (L/D) de 18,8.

Les principaux paramètres de réglage de la presse étaient les suivants:

- la température de la matière était comprise entre 200° C et 240° C selon le polymère ou le copolymère de redispersion utilisé
- la température de buse évoluait entre 180°C et 240°C selon le polymère ou copolymère de redispersion utilisé
- la température du moule était de 40°C
- la vitesse d'injection maximum était de 200 millimètres par seconde
- la pression d'injection était de 100 bars
- la durée du cycle était de l'ordre de 62 secondes comprenant un temps de refroidissement de 30 secondes, un temps d'injection de 2 secondes, un temps de maintien de 25 secondes et enfin, un temps entre deux cycles de 5 secondes. La presse a été alimentée successivement avec des polymères ou copolymères seuls servant de témoin, et par des mélanges des mêmes polymères ou copolymères dans lesquels ont été introduites des matières minérales par l'intermédiaire d'agrégats selon l'invention ou de "mélanges-maîtres" choisis parmi les meilleurs offerts actuellement sur le marché.

Pour chaque polymère ou copolymère utilisé en vue d'effectuer le test de redispersion, les formulations suivantes ont été mises en oeuvre.

- polymère ou copolymère vierge
- polymère ou copolymère chargé à 20 % et 40 % en poids de matières minérales pulvérulentes, par rapport à la formule totale, ces matières minérales étant apportées ou bien par les agrégats selon l'invention ou encore par des "mélanges-maîtres" bien connus de l'homme de l'art.

Dans le cas des formulations comportant des matières minérales pulvérulentes, les mélanges de polymères ou copolymères avec les agrégats selon l'invention ou les "mélanges-maîtres" selon l'art connu, étaient réalisés à température ambiante dans un mélangeur du type "Tonneau".

Comme il est bien connu qu'il existe une étroite relation entre les propriétés mécaniques d'une matière plastique chargée et la qualité de la redispersion des matières minérales pulvérulentes dans le polymère ou copolymère de redispersion, et ce pour un taux de charge donnée, toutes les éprouvettes réalisées par injection ont été soumises à des tests de propriétés mécaniques tels que la détermination de la force maximale, de la force à la rupture, de l'allongement à la rupture, du module d'élasticité en flexion quatre points, et enfin, du choc Charpy à 0°C et -23°C, les deux propriétés mécaniques les plus représentatives de la bonne redispersion étant les mesures de la résistance au choc et de l'allongement à la rupture.

Dans un premier groupe d'essais (1 à 5) on a procédé à la redispersion des agrégats selon l'invention au sein d'un polyéthylène basse densité, commercialisé par la société ATOCHEM sous la référence de "LACQTENE 1070 MN 18", d'indice de fluidité (190°C - 2,16 kg) égal à 7.

L'essai 1 concerne le polyéthylène basse densité vierge tel que précité.

L'essai 2 concerne l'incorporation dans le polymère précité de 20 % en poids de $CaCO_3$ Millicarb, à partir d'un "mélange-maître" commercialisé par la société MULTIBASE (France) sous la dénomination LDPE 707 A et réputé pour ses bonnes qualités de redispersion.

L'essai 3 concerne l'incorporation dans le polymère précité de 20 % en poids de $CaCO_3$ à partir de l'agrégat selon l'invention réalisé selon le mode de préparation 1 de l'exemple 1.

L'essai 4 concerne le même type de formulation que l'essai 2, mais comporte 40 % en poids de $CaCO_3$ à partir du "mélange-maître" LDPE 707 A de MULTIBASE.

L'essai 5 concerne le même type de formulation que l'essai 3, mais comporte 40% en poids de $CaCO_3$ apporté par l'agrégat selon l'invention réalisé selon le mode de préparation 1 de l'exemple 1.

Tous les résultats relatifs aux mesures de propriétés mécaniques ont été consignés dans le tableau I ci-après :

TABLEAU I

| POLYETHYLENE BASSE DENSITE | | | | | |
|---|---|---|---|---|---|
| Essai N° | 1 | 2 | 3 | 4 | 5 |
| | Polymère vierge | A.A. | INV | A.A. | INV |
| % de $CaCO_3$ | 0 | 20 | 20 | 40 | 40 |
| Force maxi $N/mm^2$ | 10 | 10 | 9,6 | 10 | 8,7 |
| Force rupture $N/mm^2$ | 9,7 | 9,5 | 9,2 | 9,5 | 8,5 |
| Allongement Rupture % | 210 | 153 | 160 | 95 | 105 |
| Module d'élasticité Flexion $N/mm^2$ (4 points) | 120 | 160 | 145 | 240 | 195 |
| Choc "Charpy" $mJ/mm^2$ à 0°C | NC | NC | NC | NC | NC |
| à − 23°C | NC | NC | NC | NC | NC |

A.A. = Art antérieur
INV = Invention
NC = Non Cassé

Dans un deuxième groupe d'essais (6 à 10), on a procédé à la redispersion des agrégats selon l'invention dans du polyéthylène basse densité linéaire (DOW CHEMICAL : Dowlex 2047) d'indice de fluidité 2,3 ( 190°C - 2,16 kg).

Essai 6 : polymère vierge

Essai 7 : incorporation de 20 % en poids de $CaCO_3$ Millicarb de la société OMYA (ayant les mêmes caractéristiques que celles précitées) à partir du "mélange-maître" LDPE 707 A de MULTIBASE.

Essai 8 : incorporation de 20 % en poids de $CaCO_3$ Millicarb à partir d'agrégats selon l'invention réalisés selon le mode de préparation 4 de l'exemple 1.

Essai 9 : incorporation de 40 % en poids de $CaCO_3$ Millicarb à partir du "mélange-maître" LDPE 707 A de MULTIBASE.

Essai 10 : incorporation de 40 % en poids de $CaCO_3$ Millicarb à partir des agrégats selon l'invention définis dans l'essai 8.

Tous les résultats relatifs aux mesures de propriétés mécaniques ont été consignés dans le tableau II ci-après :

TABLEAU II

| POLYETHYLENE BASSE DENSITE LINEAIRE | | | | | |
|---|---|---|---|---|---|
| Essai N° | 6 | 7 | 8 | 9 | 10 |
| | Polymère vierge | A.A. | INV | A.A. | INV |
| % de $CaCO_3$ | 0 | 20 | 20 | 40 | 40 |
| Force maxi N/mm² | 17 | 17,8 | 17,2 | 14,4 | 11,4 |
| Force rupture N/mm² | 16,6 | 17,7 | 16,4 | 14,4 | 10,9 |
| Allongement Rupture % | 510 | 552 | 560 | 182 | 240 |
| Module d'élasticité Flexion N/mm² (4 points) | 200 | 240 | 230 | 410 | 310 |
| Choc "Charpy" mJ/mm² à 0°C | NC | NC | NC | NC | NC |
| à - 23°C | NC | NC | NC | NC | NC |

Dans un troisième groupe d'essais (11 à 13) on a procédé à la redispersion des agrégats selon l'invention dans du polyéthylène haute densité (HOECHST : Hostalène GC 7260) d'indice de fluidité 8 (190°C - 2,16 kg).

Essai 11 : polymère vierge

Essai 12 : incorporation de 20 % en poids de $CaCO_3$ Millicarb à partir du "mélange-maître" LDPE 707 A de MULTIBASE.

Essai 13 : incorporation de 20 % en poids de $CaCO_3$ Millicarb à partir d'agrégats selon l'invention réalisés selon le mode de préparation 1 de l'exemple 1.

Tous les résultats relatifs aux mesures des propriétés mécaniques ont été consignés dans le tableau III ci-après.

TABLEAU III

| POLYETHYLENE HAUTE DENSITE | | | |
|---|---|---|---|
| Essai N° | 11 | 12 | 13 |
| | Polymère vierge | A.A. | INV |
| % de $CaCO_3$ | 0 | 20 | 20 |
| Force maxi $N/mm^2$ | 26 | 21 | 21 |
| Force rupture $N/mm^2$ | 10,4 | 9,4 | 11 |
| Allongement Rupture % | 92 | 100,5 | 115 |
| Module d'élasticité Flexion $N/mm^2$ (4 points) | 1020 | 1370 | 1050 |
| Choc "Charpy" $mJ/mm^2$ à 0°C | NC | NC | NC |
| à - 23°C | NC | NC | NC |

Dans un quatrième groupe d'essais (14 à 18), on a procédé à la redispersion des agrégats selon l'invention comparativement à un "mélange-maître" de l'art connu, dans du polypropylène homopolymère (I.C.I. Propatène GYM 45) d'indice de fluidité 15 (230°C - 2,16 kg).

Essai 14 : polymère vierge

Essai 15 : polymère chargé à 20 % en poids de $CaCO_3$ Millicarb à partir de "mélange-maître" PPH 7012 A de MULTIBASE.

Essai 16 : polymère chargé à 20 % en poids de $CaCO_3$ Millicarb à partir d'agrégats selon l'invention réalisés selon le mode de préparation 4 de l'exemple 1.

Essai 17 : polymère chargé à 40 % en poids de $CaCO_3$ Millicarb conformément à l'essai 15.

Essai 18 : polymère chargé à 40 % en poids de $CaCO_3$ Millicarb conformément à l'essai 16.

Tous les résultats relatifs aux mesures des propriétés mécaniques ont été consignés dans le tableau IV ci-après :

TABLEAU IV

| POLYPROPYLENE HOMOPOLYMERE | | | | | |
|---|---|---|---|---|---|
| Essai N° | 14 | 15 | 16 | 17 | 18 |
| | Polymère vierge | A.A. | INV | A.A. | INV |
| % de $CaCO_3$ | 0 | 20 | 20 | 40 | 40 |
| Force maxi $N/mm^2$ | 34,6 | 31 | 30 | 23 | 21 |
| Force rupture $N/mm^2$ | 17 | 26 | 23 | 18 | 16 |
| Allongement Rupture % | 83 | 36 | 45 | 64 | 67 |
| Module d'élasticité Flexion $N/mm^2$ (4 points) | 1257 | 1814 | 1550 | 2431 | 1800 |
| Choc "Charpy" $mJ/mm^2$ à 0°C | 46 | 31,70 | 36 | 19,60 | 23 |
| à - 23°C | 11 | 20,40 | 20 | 13,30 | 15 |

Dans un cinquième groupe d'essais (19 à 23), on a procédé à la redispersion des agrégats selon l'invention comparativement à un "mélange-maître" de l'art connu, dans du polypropylène copolymère (HOECHST : Hostalène PPR 1042) d'indice de fluidité 4 (230°C - 2,16 kg).

Essai 19 : polymère vierge

Essai 20 : polymère chargé à 20 % en poids de $CaCO_3$ Millicarb à partir de "mélange-maître" PPC 7012 A de MULTIBASE.

Essai 21 : polymère chargé à 20 % en poids de $CaCO_3$ Millicarb à partir d'agrégats selon l'invention réalisés selon le mode 1 de l'exemple 1.

Essai 22 : polymère chargé à 40 % en poids de $CaCO_3$ Millicarb conformément à l'essai 20.

Essai 23 : polymère chargé à 40 % en poids de $CaCO_3$ Millicarb conformément à l'essai 21.

Tous les résultats concernant les mesures de propriétés mécaniques ont été consignés dans le tableau V ci-après :

TABLEAU V

| COPOLYMERE ETHYLENE PROPYLENE | | | | | |
|---|---|---|---|---|---|
| Essai N° | 19 | 20 | 21 | 22 | 23 |
| | Polymère vierge | A.A. | INV | A.A. | INV |
| % de $CaCO_3$ | 0 | 20 | 20 | 40 | 40 |
| Force maxi $N/mm^2$ | 26 | 23 | 22 | 19 | 19 |
| Force rupture $N/mm^2$ | 12 | 19 | 18 | 15 | 15 |
| Allongement Rupture % | 294 | 200 | 260 | 137,5 | 195 |
| Module d'élasticité Flexion $N/mm^2$ (4 points) | 990 | 1350 | 1170 | 1782 | 1300 |
| Choc "Charpy" $mJ/mm^2$ à 0°C | NC | 62 | NC | 50 | NC |
| à - 23°C | NC | 21,30 | 40 | 16,50 | 30 |

L'examen des cinq tableaux précités révèle que pour tous les essais relatifs à la redispersion des agrégats selon l'invention, les caractéristiques d'allongement à la rupture et de choc sont au moins égales, voire supérieures aux mêmes caractéristiques déterminées sur les éprouvettes de "mélanges-maîtres" de l'art connu.
Ainsi, il apparaît que la redispersion des agréats selon l'invention est excellente, et ce malgré le taux élevé en matières minérales pulvérulentes dans les agrégats.

Exemple 3

Cet exemple illustre, à même titre que l'exemple 2, l'excellente redispersion au sein de polymères polyoléfiniques des agrégats selon l'invention, préparés selon le mode 1 de l'exemple 1 est contenant 88 % en poids de $CaCO_3$ (Millicarb), représentant 790 parties en poids pour 100 parties en poids de polymère et/ou copolymère polyoléfinique selon l'invention, d'indice de fluidité d'au moins 50.

Pour ce faire, on a réalisé l'extrusion d'un film de 20 µm d'épaisseur au moyen d'une machine ANDOUART, dont la vis avait un diamètre D de 40 mm, une longueur égale à 18 D, la filière ayant un diamètre de 130 mm et un entrefer de 0,5 mm. La vitesse de rotation de la vis était de 50 à 70 tours par minute, la température d'extrusion de 190°C et le taux de gonflage de 2,4.

La machine ANDOUART a été alimentée successivement avec le polymère de redispersion seul (essai 24) servant de témoin et par un mélange formé du même polymère et d'une charge minérale introduite par l'intermédiaire d'agrégats selon l' invention (essai 25).

L'essai 24 était réalisé avec un polyéthylène basse densité, d'indice de fluidité 2 (190°C - 2,16 kg) commercialisé par ESSO sous la référence Escorène LD 104.

L'essai 25 était réalisé avec un mélange formé du même polyéthylène et de $CaCO_3$ (Millicarb) à raison de 10 % en poids, incorporé par l'intermédiaire d'agrégats selon l'invention, produits selon le mode 2 de l'exemple 1.

De cette manière, on a pu extruder à une épaisseur de 20µm un film de polymère vierge pendant 30 minutes sans provoquer de casse (essai 24).

On a pu de la même façon, et pendant un temps équivalent, produire un film avec le polyéthylène chargé (essai 25) sans provoquer de casse.

L'absence de toute déchirure de la gaine produite, associée à un examen à l'oeil nu et à la loupe binoculaire a permis de constater l'absence d'agglomérats dans ledit film et de conclure à l'excellente redispersion de l'agrégat selon l'invention.

Exemple 4

Cet exemple illustre, à même titre que les exemples 2 et 3, la mise en oeuvre d'un autre moyen d'extrusion pour observer et vérifier la bonne redispersion des agrégats selon l'invention au sein de polyoléfines classiquement utilisées par l'industrie de transformation.

Dans ce but, on a effectué l'extrusion d'un ruban d'épaisseur 3 mm à travers une filière plate, au moyen d'une extrudeuse monovis TOREY dont la vis avait un diamètre D de 25 mm, une longueur égale à 15 D alors que la filière avait une longueur de 16 mm et une hauteur de 2,5 mm. La vitesse de rotation de la vis était de 50 tours par minute, le taux de compression de 3 et la température d'extrusion de 170° C pour du polyéthylène et de 210° C pour du polypropylène copolymère.

On a successivement alimenté l'extrudeuse avec les polymère et copolymère de redispersion seuls (essais 26 et 29) servant de témoins, et par des mélanges formés des mêmes polymère ou copolymère et d'une charge minérale introduite sous la forme de granulés appartenant au domaine public (essais 27 et 30), et d'agrégats selon l'invention (essais 28 et 31) en incorporant 1 % en poids de $CaCO_3$ par rapport à la masse totale.

L'essai 26 a été réalisé avec un polyéthylène basse densité d'indice de fluidité 7 (190° C - 2,16 kg) (ATOCHEM : LACQTENE 1070 MN 18) tandis que l'essai 29 l'a été avec un polypropylène copolymère d'indice de fluidité 5 (230° C - 2,16 kg) (ATOCHEM : LACQTENE 3050 MN 4)

L'essai 27 concerne la redispersion (dans le polyéthylène de l'essai 26) de 1% en poids de $CaCO_3$ Millicarb incorporé sous la forme d'un "mélange-maître" LDPE 707 A (MULTIBASE), tandis que l'essai 30 concerne la redispersion de 1 % en poids du même $CaCO_3$ dans le polypropylène copolymère de l'essai 29 à partir du même "mélange -maître".

L'essai 28 concerne la redispersion dans le polyéthylène de l'essai 26 de 1 % en poids de $CaCO_3$ (Millicarb) incorporé sous la forme d'agrégats selon l'invention, préparés selon le mode 3 de l'exemple 1, alors que l'essai 31 concerne la redispersion de 1 % en poids du même $CaCO_3$ dans le polypropylène copolymère de l'essai 29 à partir des mêmes agrégats selon l'invention. L'examen à la loupe binoculaire de grossissement 50 a révélé une excellente redispersion des agrégats selon l'invention (absence d'agglomérats), dispersion meilleure que celle obtenue avec des "mélanges-maîtres" de l'art connu.

Exemple 5

Cet exemple illustre l'excellente compatibilité des agrégats selon l'invention avec des polymères de redispersion autres que des polyoléfines, tels que polystyrène, ABS, polyamide. Pour ce faire, on a préparé par injection de éprouvettes normalisées au moyen de la presse NESTAL NEOMAT 170/90 décrite dans l'exemple 2.

Dans un premier groupe d'essais (32 à 34), on a réalisé des injections de polystyrène à une température de 240° C.

L'essai 32 concerne l'injection de polystyrène vierge (Hostyrène N 4000 de HOECHST) d'indice de fluidité 4,5 (200° C - 5 kg).

L'essai 33 concerne l'incorporation dans le polystyrène précité de 20 % en poids de $CaCO_3$ (Millicarb) à partir d'un "mélange-maître" de l'art connu (PS 600 A de MULTIBASE).

L'essai 34 concerne l'incorporation dans le polystyrène précité de 20 % en poids de $CaCO_3$ (Millicarb) à partir d'agrégats selon l'invention préparés selon le mode 1 de l'exemple 1.

Tous les résultats relatifs aux mesures de propriétés mécaniques ont été consignés dans le tableau VI ci-après :

TABLEAU VI

| POLYSTYRENE | | | |
|---|---|---|---|
| Essai N° | 32 | 33 | 34 |
| | Polymère vierge | A.A. | INV |
| % de $CaCO_3$ | 0 | 20 | 20 |
| Force maxi $N/mm^2$ | 49 | 36 | 41 |
| Force rupture $N/mm^2$ | 46 | 35 | 35 |
| Allongement Rupture % | 7,5 | 11 | 14 |
| Module d'élasticité Flexion $N/mm^2$ (4 points) | 2840 | 3530 | 3200 |
| Choc "Charpy" $mJ/mm^2$ à 0°C | 19 | 18 | 19 |
| à - 23°C | 21 | 17 | 19 |

Dans un deuxième groupe d'essais (35 et 36) on a réalisé des injections de polyamide à une température de 240° C.

L'essai 35 concerne l'injection d'un polyamide vierge (BASF - Ultramid B 3 K) ayant un indice de fluidité de 2,6 (220° C - 2,16 kg).

L'essai 36 concerne l'incorporation dans le polyamide précité de 20 % en poids de $CaCO_3$ (Millicarb) à partir d'agrégats selon l'invention prépares selon le mode 1 de l'exemple 1.

Tous les résultats relatifs aux mesures des propriétés mécaniques ont été rassemblés dans le tableau VII ci-après.

TABLEAU VII

| POLYAMIDE | | |
|---|---|---|
| Essai N° | 35 | 36 |
| | Polymère vierge | INV |
| % de $CaCO_3$ | 0 | 20 |
| Force maxi $N/mm^2$ | 49 | 50 |
| Force rupture $N/mm^2$ | 61 | 43 |
| Allongement Rupture % | 310 | 90 |
| Module d'élasticité Flexion $N/mm^2$ (4 points) | 1620 | 2200 |
| Choc "Charpy" $mJ/mm^2$ à 0°C | NC | 74 |
| à − 23°C | NC | 45 |

L'examen du tableau VI précité révèle que pour tous les essais relatifs à la redispersion des agrégats selon l'invention, les caractéristiques d'allongement à la rupture et de choc sont au moins égales et mêmes supérieures aux mêmes caractéristiques déterminées sur les éprouvettes de "mélanges-maîtres" de l'art connu.

Quant au tableau VII, l'essai mentionné concerne la redispersion dans les polyamides des seuls agrégats selon l'invention, l'art connu n'offrant pas de "mélange-maître" permettant de réaliser des essais comparatifs. L'examen des éprouvettes injectées et de leurs caractéristiques mécaniques permettent d'affirmer l'excellente redispersion dans les polyamides des matières minérales apportées par les agrégats selon l'invention.

Il apparaît dès lors que la redispersion des agrégats selon l'invention est excellente dans des polymères autres que les polyoléfines, et ce malgré des taux élevés en matières minérales pulvérulentes dans les agrégats.

En d'autres termes, les agrégats selon l'invention se révèlent compatibles avec divers polymères thermoplastiques de redispersion et ce, par opposition aux granulés ou "mélanges-maîtres" de l'art connu dont la compatibilité en général n'est possible qu'avec les polymères entrant dans leur composition.

Exemple 6

Cet exemple illustre la réalisation d'agrégats comportant un pourcentage en poids progressif de matières minérales dans les limites de l'invention, agrégats qui après leur réalisation, étaient cohérents, avaient un aspect plastique et pouvaient être facilement redispersés dans l'un des polymères et/ou copolymères de redispersion précités.

Pour ce faire, on a réalisé sept mélanges (essais 37 à 43).

Les compositions de ces divers mélanges ont été rassemblés dans le tableau VIII ci-après.

TABLEAU VIII

| | Essai N° | 37 | 38 | 39 | 40 | 41 | 42 | 43 |
|---|---|---|---|---|---|---|---|---|
| Taux de $CaCO_3$ | en parties en poids par rapport au mélange total | 750 | 800 | 750 | 800 | 850 | 880 | 900 |
| | en parties pour 100 parties de polymère | 300 | 400 | 309 | 416 | 599 | 786 | 985 |
| Polymère | en parties en poids par rapport au mélange total | 250 | 200 | 243 | 192,5 | 142 | 112 | 91,4 |
| Agent fluidifiant | en parties en poids par rapport au mélange total | 0 | 0 | 7 | 7,5 | 8 | 8 | 8 |

Ces divers mélanges ont été préparés en pratiquant le même protocole que celui du mode 2 de l'exemple 1.

Sur certains des essais 37 à 43 ont été pratiqués des mesures d'indices de fluidité, à une température de 140°C, sous une charge de 2,16 kg, avec une filière de diamètre 2,09 mm et des mesures de masses volumiques réelles des agrégats selon l'invention, comparés aux masses volumiques théoriques.

Tous les résultats relatifs à ces divers essais ont été consignés dans le tableau IX ci-après.

TABLEAU IX

| Essai N° | 37 | 38 | 41 | 42 | 43 |
|---|---|---|---|---|---|
| Taux de $CaCO_3$ en parties en poids par rapport au mélange total | 750 | 800 | 850 | 880 | 900 |
| Indice de fluidité en g pour 10 minutes | 23,5 | 0 | 25 | 0,5 | 0,1 |
| Masse volumique réelle mesurée | 1,76 | 1,88 | 2,04 | 2,12 | 2,10 |
| Masse volumique calculée (théorique) | 1,76 | 1,89 | 2,05 | 2,15 | 2,27 |

Ce tableau permet d'observer dans la préparation des agrégats l'efficacité de la combinaison du polymère polyoléfinique d'indice de fluidité au moins égal à 50 avec l'agent fluidifiant.

Il permet également de constater par la comparaison des masses volumiques réelles mesurées et théoriques que les agrégats sont bien formés d'une pâte plastique et cohérente, ceci montrant que le polymère et/ou copolymère selon l'invention sert au plus à remplir les vides interparticulaires de la structure de forte compacité formée par les matières minérales pulvérulentes.

Tous les agrégats relatifs à l'invention ont présenté une excellente redispersion dans les polymères et/ou copolymères de redispersion précités, redispersion qui s'est révélée supérieure aux "mélanges-maîtres" de l'art antérieur, bien que les quantités de matières minérales pulvérulentes soient très supérieures (985 parties en poids pour 100 parties de polymère) à celles pratiquées au maximum dans l'art antérieur (400 parties en poids pour 100 parties de polymères). La méthode utilisée pour tester la redispersion est celle décrite dans l'exemple 3 (extrusion de film de 20 μm).

Exemple 7

Cet exemple illustre la réalisation d'agrégats selon l'invention comportant diverses matières minérales pulvérulentes, tels que talc, hydrate d'alumine, kaoline calciné, dioxyde de titane.

Tous les agrégats (essais 44 à 53) ont été préparés selon le protocole décrit dans le mode 2 de préparation de l'exemple 1.

Pour tous ces essais, le polymère polyoléfinique selon l'invention d'indice de fluidité au moins égal à 50 était un mélange de Vestoplast 3632 (société HULS) et de Vestowax $H_2$ (cire de polyéthylène de la société HULS) dans des proportions en poids de 95 % du premier et de 5 % du deuxième.

L'agent fluidifiant, le même pour tous ces essais, était un alkylphosphonate de formule $C_{14}H_{29}PO_3H_2$.

Les essais témoins 44, 47, 49 et 51 relatifs au talc, au kaolin et à l'hydrate d'alumine ont été très difficilement réalisables, voire irréalisables à 800 parties en poids par rapport à la formule totale en l'absence de la combinaison nouvelle constituée par au moins une polyoléfine d'indice de fluidité au moins égal à 50 et l'agent fluidifiant.

Les agrégats ainsi préparés ont été soumis à une mesure de l'indice de fluidité selon la norme ASTM D 1238, à deux couples de température-charge (140°C - 2,16 kg) et (190°C - 5 kg) en conservant la même filière.

Toutes les données relatives aux compositions des agrégats et les résultats d'indice de fluidité mesuré ont été regroupés dans le tableau X ci-après.

TABLEAU X

| MATIERE MINERALE | ESSAI N° | Parties en poids de matières minérales par rapport au mélange total | Parties en poids de matières minérales pour 100 parties en poids de polymère | Parties en poids d'agent fluidifiant par rapport au mélange total | INDICE DE FLUIDITE 140°C 2,16 kg | INDICE DE FLUIDITE 190°C 5 kg |
|---|---|---|---|---|---|---|
| TALC | 44 | 800 | 416 | 0 | non mesurable | non mesurable |
| OOS | 45 | 800 | 416 | 7,5 | --- | 88 |
| Talcs de LUZENAC | 46 | 850 | 599 | 8 | non mesurable sous 10 kg | |
| Hydrate d'alumine | 47 | 800 | 416 | 0 | mélange non réalisable | |
| OL 104 Sté MARTINSWERK | 48 | 800 | 416 | 8 | --- | 0,1 |
| kaolin | 49 | 800 | 416 | 0 | mélange non réalisable | |
| Calciné Whitetex Sté FREEPORT | 50 | 800 | 416 | 8 | non mesurable sous 10 kg | |
| $TiO_2$ | 51 | 800 | 416 | 0 | 1,9 | --- |
| RL 90 | 52 | 800 | 416 | 8 | 210,00 | --- |
| THANN & MULHOUSE | 53 | 870 | 717 | 8,7 | --- | 8 |

Les agrégats selon l'invention relatifs aux essais 45, 46, 48, 50, 52 et 53 ont été soumis à des tests de redispersion tels qu'ils ont été décrits dans les exemples 2 et 4.

Quelle que soit la matière minérale pulvérulente utilisée, tous les agrégats précités appartenant au domaine de l'invention ont manifesté une excellente redispersion dans des polymères et copolymères aussi divers que des polychlorures de vinyle, des polyesters saturés (par exemple polytéréphtalate d'éthylène) et des polycarbonates.

Pour ce faire, on a extrudé à la filière plate une bande de 2 mm d'épaisseur au moyen d'une extrudeuse monovis GOETTFERT dont la vis avait un diamètre D : 30 mm et une longueur de 25 D. L'extrusion a été réalisée aux températures de transformation habituelles des divers polymères de redispersion.

Les bandes ainsi produites avaient un bon aspect de surface et une bonne élasticité. A partir de ces bandes, on a préparé des films d'épaisseur 100 µm grâce à une presse de compression travaillant à chaud.

L'examen de ces films à la loupe binoculaire (grossissement 50) révèle une très bonne homogénéité du film et l'absence d'agglomérats.

**Revendications**

1 - Agrégats thermoplastiques cohérents à très haute teneur en matières minérales pulvérulentes se composant desdites matières, de polymères et/ou copolymères polyoléfiniques et éventuellement de divers adjuvants connus, caractérisés en ce que, dans le but qu'ils aient simultanément une masse volumique proche et au plus égale à la masse volumique théorique des matières minérales pulvérulentes entrant dans leur composition et une excellente compatibilité pour les polymères de redispersion, les polymères et/ou copolymères entrant dans la composition desdits agrégats en présence d'un agent fluidifiant sont choisis dans le groupe des thermoplastiques de point de fusion et/ou de ramollissement au moins égal à 60° C et d'indice de fluidité d'au moins 50 (selon la norme ASTM D 1238), de type polyoléfinique autres que les polyoléfines comportant un monomère polaire.

2 - Agrégats thermoplastiques à très haute teneur en matières minérales pulvérulentes selon la revendication 1, caractérisés en ce qu'ils se composent de :

a) 19,99 à 4,05 parties en poids par rapport à la masse totale d'au moins un polymère et/ou copolymère thermoplastique polyoléfinique exempt de monomères polaires de point de fusion et/ou de ramollissement au moins égal à 60° C et d'indice de fluidité d'au moins 50,

b) 80 à 95 parties et préférentiellement de 85,7 à 92,3 parties en poids par rapport à la masse totale, de matières minérales pulvérulentes, représentant de 400 à 1 900 et préférentiellement de 600 à 1 200 parties en poids pour 100 parties en poids dudit polymère et/ou copolymère,

c) enfin, de 0,01 à 0,95 partie en poids d'un agent acide fluidifiant du mélange par rapport à la masse totale.

3 - Agrégats thermoplastiques cohérents à très haute teneur en matières minérales pulvérulentes selon les revendications 1 ou 2 caractérisés en ce que les polymère et/ou copolymère polyoléfiniques exempts de monomères polaires sont choisis dans le groupe constitué par les polyéthylènes de basse densité, linéaires ou ramifiés ou de haute densité, les polypropylènes homopolymères ou copolymères, les polybutylènes, les copolymères de deux au moins des monomères éthylène, propylène et butylène, les polyoléfines modifiées par greffage ou copolymérisation.

4 - Agrégats thermoplastiques cohérents à très haute teneur en matières minérales pulvérulentes selon la revendication 3 caractérisés en ce que les polyoléfines modifiées par greffage ou copolymérisation sont préférentiellement les polyoléfines halogénées, les polypropylènes modifiés EPDM et les polypropylènes modifiés SEBS.

5 - Agrégats thermoplastiques cohérents à très haute teneur en matières minérales pulvérulentes selon la revendication 3 caractérisés en ce que les polymère et/ou copolymère polyoléfiniques exempts de monomères polaires sont obtenus par mélange de deux au moins d'entre eux.

6 - Agrégats thermoplastiques cohérents à très haute teneur en matières minérales pulvérulentes selon l'une quelconque des revendications 1 à 5 caractérisés en ce que les polymère et/ou copolymère thermoplastiques sont préférentiellement choisis parmi ceux disposant d'un point de fusion et/ou de ramollissement d'au moins 60°C et d'un indice de fluidité d'au moins 200 et très préférentiellement d'au moins 400 selon la norme ASTM D 1238

7 - Agrégats thermoplastiques cohérents à très haute teneur en matières minérales pulvérulentes, selon l'une quelconque des revendications 1 à 6 caractérisés en ce que lesdites matières minérales pulvérulentes entrant dans leur composition seules ou en mélange sont choisies parmi les sels et/ou les oxydes minéraux contenant au moins un élément métallique.

8 - Agrégats thermoplastiques cohérents à très haute teneur en matières minérales pulvérulentes selon la revendication 7 caractérisés en ce que les matières minérales pulvérulentes sont choisies parmi les carbonates alcalino-terreux, le carbonate de magnésium, le carbonate de zinc, la dolomie, la chaux, la magnésie, les sulfates de baryum, de calcium, les hydroxydes d'aluminium, la silice, le kaolin, le talc, le mica, les oxydes de zinc, de fer, de titane, les fibres et billes de verre, la wollastonite.

9 - Agrégats thermoplastiques cohérents à très haute teneur en matières minérales pulvérulentes selon l'une quelconque des revendications 1 à 8 caractérisés en ce que aux matières minérales pulvérulentes sont adjointes des matières pulvérulentes organiques d'origines naturelle et/ou

synthétique, en particulier les colorants, l'amidon, les fibres et farine de cellulose, les fibres de carbone.

10 - Agrégats thermoplastiques cohérents à très haute teneur en matières minérales pulvérulentes selon l'une quelconque des revendications 1 à 9 caractérisés en ce que les matières pulvérulentes minérales et/ou organiques ont au moins une dimension comprise entre 0,01 et 100 µm et préférentiellement entre 0,1 et 5 µm.

11 - Agrégats thermoplastiques cohérents à très haute teneur en matières minérales pulvérulentes selon l'une quelconque des revendications 1 à 9 caractérisés en ce que l'agent fluidifiant répond à la formule :

$$R-(A)_m-(B)_n-X$$

comprenant au moins une fonction acide libre, dans laquelle X est un radical carboxylique, sulfonique, sulfurique, phosphinique ou phosphonique, (A) est l'oxyde d'éthylène, (B) est l'oxyde de propylène, avec $0 \leqq (m + n) \leqq 24$, R est choisi dans le groupe formé par les radicaux alkyls linéaires ou non, saturés ou insaturés, les radicaux aryl, les alkyls-aryls, les hétérocyles saturés ou non, contenant de 5 à 28 atomes de carbone et de préférence de 8 à 24 atomes de carbone, les stéroïdes.

12 - Agrégats thermoplastiques cohérents à très haute teneur en matières minérales pulvérulentes selon la revendication 11 caractérisés en ce que, quand X comporte plusieurs fonctions acides, l'une d'entre elles au moins est libre, les autres étant salifiées ou estérifiées par un alcool de formule R'-OH dans laquelle R' est choisi dans le groupe constitué par une chaine carbonée contenant de 1 à 4 atomes de carbone et l'un des radicaux appartenant au groupe défini pour R.

13 - Agrégats thermoplastiques cohérents à très haute teneur en matières minérales pulvérulentes selon la revendication 11 caractérisés en ce que R comporte au moins un groupement fonctionnel du type halogène, -OH, -COOH, -COOR, $-NO_2$, $-NH_2$, $-CONH_2$, -CN, sulfonique, sulfurique, phosphinique, phosphonique.

14 - Agrégats thermoplastiques cohérents à très haute teneur en matières minérales pulvérulentes selon l'une quelconque des revendications 11 à 13 caractérisés en ce que le radical R' est identique au radical R.

Office européen des brevets

# RAPPORT DE RECHERCHE EUROPEENNE

Numero de la demande

EP 87 42 0198

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 4) |
|---|---|---|---|
| E | EP-A-0 203 017 (PLUESS STAUFER) * Revendications * & FR-A-2 582 310 | 1-10 | C 08 L 23/02<br>C 08 K 3/00<br>C 08 K 5/09<br>C 08 K 5/41<br>C 08 K 5/42<br>C 08 K 5/53 |
| D,A | EP-A-0 114 724 (ICI) * Revendications 1-4; page 2, ligne 29 - page 3, ligne 2 * | 1-10 | |
| D,A | EP-A-0 000 726 (HOECHST AG) * Revendications; page 9, ligne 3 * | 1-11 | |
| D,A | EP-A-0 017 038 (HOECHST AG) * Revendications; page 9, ligne 14 * | 1-11 | |

DOMAINES TECHNIQUES RECHERCHES (Int. Cl.4)

C 08 J
C 08 K
C 08 L

Le présent rapport de recherche a été établi pour toutes les revendications

| Lieu de la recherche | Date d'achèvement de la recherche | Examinateur |
|---|---|---|
| LA HAYE | 06-11-1987 | HOFFMANN K.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant